# EUROPÄISCHE PATENTANMELDUNG

(11) **EP 2 674 465 A1**
(43) Veröffentlichungstag der Anmeldung: **18.12.2013**
(21) Anmeldenummer: 12171464.6
(22) Anmeldetag: 11.06.2012
(51) Int. Cl.: C09J 7/02, B65H 19/10

(54) **Klebeband für einen fliegenden Rollenwechsel**

(71) Anmelder: Orafol Europe GmbH, 16515 Oranienburg (DE)
(72) Erfinder: Rohde, Holger Dr., 12437 Berlin (DE); Leis, Michael, 71570 Oppenweiler (DE)
(74) Vertreter: Müller, Wolfram Hubertus

(57) **Zusammenfassung**

Die Erfindung betrifft ein Klebeband für einen fliegenden Rollenwechsel, das aufweist: ein Trägermaterial (1) mit einer Oberseite, einer Unterseite und zwei Längskanten (1a, 1 b), wobei die Oberseite des Trägermaterials (1) mit einem Klebstoff (4) beschichtet und die Unterseite des Trägermaterials (1) nichtklebend ausgebildet ist; und ein doppelseitig klebendes Band (2) mit einer Oberseite, einer Unterseite und zwei Längskanten (2a, 2b), das ein spaltbares Trägermaterial (21) aufweist, das beidseitig mit einem Klebstoff (22, 23) beschichtet ist. Dabei ist das doppelseitig klebende Band (2) an der Unterseite des Trägermaterials (1) angeordnet. Es ist vorgesehen, dass das doppelseitig klebende Band (2) derart an der Unterseite des Trägermaterials (1) angeordnet ist, dass ein Teilbereich (B) des doppelseitig klebenden Bandes (2) von der einen Längskante (1a) des Trägermaterials (1) übersteht. Die Erfindung betrifft des Weiteren die Verwendung eines solchen Klebebandes für einen fliegenden Rollenwechsel.

## Beschreibung

Die Erfindung betrifft ein Klebeband für einen fliegenden Rollenwechsel gemäß dem Oberbegriff des Patentanspruchs 1.

Aus der EP 1 022 245 B1 ist ein gattungsgemäßes Klebeband bekannt. Das Klebeband umfasst einen Papierträger sowie ein doppelseitig klebendes Klebeband mit einem beidseitig mit Selbstklebemasse beschichteten Spaltpapier. Das doppelseitig klebende Klebeband ist in einem Abstand von 0,5 mm bis 15 mm hinter der einen Längskante des Papierträgers angeordnet.

Derartige Klebebänder finden Einsatz bei einem fliegenden Rollenwechsel. Ein fliegender Rollenwechsel stellt z.B. in Papierfabriken und im Rollenrotationsdruck ein übliches Verfahren dar, um eine alte, fast abgespulte Papierrolle durch eine neue Papierrolle zu ersetzen. Dabei wird die neue Rolle eingespannt und beschleunigt, wenn sich die ablaufende Papierrolle dem Ende zuneigt. Die Beschleunigung erfolgt solange, bis die Umfangsgeschwindigkeit der neuen Rolle der Bahngeschwindigkeit der aktuell auslaufenden Bahn entspricht. Eine Verbindung der neuen Rolle mit der auslaufenden Bahn der alten Rolle erfolgt unter Verwendung eines gattungsgemäßen Klebebandes. Hierzu wird ergänzend auch auf die EP 0 818 408 B1 verwiesen.

Der vorliegenden Erfindung liegt die Aufgabe zugrunde, ein weiteres Klebeband für einen fliegenden Rollenwechsel bereitzustellen.

Diese Aufgabe wird erfindungsgemäß durch ein Klebeband mit den Merkmalen des Anspruchs 1 gelöst. Ausgestaltungen der Erfindung sind in den Unteransprüchen angegeben.

Danach zeichnet sich die vorliegende Erfindung durch ein Klebeband aus, bei dem das doppelseitig klebende Band derart an der Unterseite des Trägermaterials angeordnet ist, dass ein Teilbereich des doppelseitig klebenden Bandes von der einen Längskante des Trägermaterials übersteht. Dies bedeutet, dass die eine Längskante des doppelseitig klebenden Bandes versetzt und dabei abstehend von der Längskante des Trägermaterials und die andere Längskante des doppelseitig klebenden Bandes an der Unterseite des Trägermaterials verläuft, so dass ein erster Teilbereich des doppelseitig klebenden Bandes an der Unterseite des Trägermaterials befestigt ist und sich bis zur Längskante des Trägermaterials erstreckt und ein zweiter Teilbereich des doppelseitig klebenden Bandes gegenüber dem Trägermaterial und dessen Längskante übersteht.

Die erfindungsgemäße Lösung ist mit dem Vorteil verbunden, dass das zu spleißende bzw. zu spaltende spaltbare Trägermaterial bei einem fliegenden Rollenwechsel aufgrund seines Überstehens gegenüber dem Trägermaterial direkt mit der Lage einer (alten) Rolle in Kontakt tritt und unmittelbar mittels dieser Lage gespalten wird. Hierdurch wird in sicherer und effektiver Weise ein Spalten des spaltbaren Trägermaterials bereitgestellt.

Bei dem Trägermaterial handelt es sich beispielsweise um einen Papierträger oder um einen Kunststoffträger. Grundsätzlich kann das Trägermaterial aus einem beliebigen flächigen Material gebildet sein.

Das spaltbare Trägermaterial kann durch ein beliebiges flächiges Material gebildet sein, das im Falle des Wirkens gegensätzlicher Kräfte auf die mit Klebstoff beschichtete Oberseite und Unterseite eine Spaltung erfährt. Beispielsweise handelt es sich bei dem spaltbaren Trägermaterial um ein Spaltpapier, d.h. einen spleißfreudigen Papierträger.

Der Klebstoff, mit dem die Oberseite des Trägermaterials und die Ober- und Unterseite des spaltbaren Trägermaterials beschichtet sind, wird beispielsweise durch einen Haftklebstoff, beispielsweise einen wasserlöslichen drucksensitiven Haftklebstoff gebildet. Jedoch können auch andere Haftklebstoffe Verwendung finden.

Der überstehende Teilbereich des doppelseitig klebenden Bandes bildet in einem Ausführungsbeispiel der Erfindung einen parallel zur Längskante des Trägermaterials verlaufenden, überstehenden Bereich aus. Dies bedeutet, dass die Längskanten des doppelseitig klebenden Bandes parallel zu den Längskanten des Trägermaterials verlaufen und zwischen sich einen rechteckförmigen Bereich definieren. Grundsätzlich kann jedoch auch eine winklige Anordnung der jeweiligen Längskanten zueinander vorgesehen sein. Auch wird darauf hingewiesen, dass unter einer Längskante im Sinne der vorliegenden Erfindung lediglich eine längliche Begrenzung des jeweiligen Trägermaterials verstanden wird. Diese Begrenzung kann geradlinig sein, jedoch auch andere Formen aufweisen wie z.B. eine Wellenform. Wenn die äußere Längskante des doppelseitig klebenden Bandes beispielsweise wellenförmig ausgebildet ist, bildet der überstehende Teilbereich des doppelseitig klebenden Bandes keinen parallelen, rechteckförmigen Streifen aus, sondern eine an seinem Rand wellenförmige überstehende Kontur.

Der überstehende Teilbereich des doppelseitig klebenden Bandes besitzt beispielsweise eine Breite zwischen 2 mm und 35 mm. Beispielsweise ist eine Breite des überstehenden Teilbereiches von ca. 5 bis 25 mm realisiert. Der nicht überstehende, an der Unterseite des Trägermaterials befindliche Teilbereich des doppelseitig klebenden Bandes weist beispielsweise eine Breite zwischen 1,5 mm und 20 mm, beispielsweise eine Breite von ca. 2 bis 10 mm auf. Die Breite des überstehenden Teilbereichs ist somit in Ausführungsbeispielen größer als die Breite des nicht überstehenden, an der Unterseite des Trägermaterials klebenden Teilbereichs.

Gemäß einer Ausgestaltung der vorliegenden Erfindung ist der Klebstoff an der Oberseite des Trägermaterials mit einer abziehbaren Decklage abgedeckt. Die abziehbare Decklage kann dabei derart von der Oberseite des Trägermaterials bzw. der dort realisierten Klebstoffbeschichtung entfernt werden, dass kein Klebstoff an der abziehbaren Decklage verbleibt und nach Abziehen der abziehbaren Decklage das Trägermaterial aufgrund des an seiner Oberseite realisierten Klebstoffs durch Andrücken in Klebeverbindung mit einem weiteren Material treten kann. Bei der abziehbaren Decklage handelt es sich beispielsweise um ein silikonisiertes Papier.

Dabei ist in einer Ausführungsvariante vorgesehen, dass die abziehbare Decklage sich über die eine Längskante des Trennmaterials hinaus so weit erstreckt, dass sie auch die mit einem Klebstoff beschichtete Seite des spaltbaren Trägermaterials abdeckt. Die Decklage dient somit der Abdeckung und dem Schutz sowohl der mit Klebstoff beschichteten Oberseite des Trägermaterials als auch der mit Klebstoff beschichteten Oberseite des spaltbaren Trägermaterials. Dabei ist die abziehbare Decklage bevorzugt derart ausgebildet, dass ihre Längskante auf der Längskante des doppelseitig klebenden Bandes bzw. dessen spaltbaren Trägermaterials liegt.

Gemäß einem weiteren Ausführungsbeispiel ist die Decklage mit einem Schlitz versehen. Die Realisierung eines Schlitzes dient dazu, die oberste Lage einer Papierbahn bzw. Materialbahn vor einem fliegenden Rollenwechsel zu positionieren, wobei zunächst ein erster Teilbereich der Decklage entfernt und mit der Papierbahn bzw. Materialbahn verbunden wird und anschließend ein zweiter Teilbereich der Decklage entfernt wird, zur Freigabe einer Klebefläche zur Verbindung mit einer weiteren Papierbahn bzw. Materialbahn.

Der genannte Schlitz ist gemäß einem Ausführungsbeispiel im Abstand zwischen 10 mm und 30 mm von der Längskante des Trägermaterials ausgebildet, die der Längskante gegenüberliegt, an der das doppelseitig klebende Band befestigt ist.

Auch an der mit Klebstoff beschichteten Unterseite des spaltbaren Trägermaterials kann eine abziehbare Decklage angeordnet sein. Diese kann ebenfalls ein silikonisiertes Papier umfassen bzw. aus einem solchen gebildet sein.

Die Erfindung betrifft in einem weiteren Erfindungsaspekt die Verwendung eines Klebeband gemäß Anspruch 1 für einen fliegenden Rollenwechsel, wobei
- die mit einem Klebstoff beschichtete Oberseite des Trägermaterials zumindest teilweise an der Unterseite der obersten Lage einer neuen Rolle verklebt wird,
- die mit einem Klebstoff beschichtete Unterseite des doppelseitig klebendes Bandes an der Oberseite der darunter liegenden nächstfolgenden Lage der neuen Rolle verklebt wird,
- wobei der Klebstoff auf der Oberseite des gegenüber der Längskante des Trägermaterials überstehenden Teilbereichs des doppelseitig klebenden Bandes frei liegt und dort eine Klebstoffschicht zur Verbindung mit einer Lage einer alten Rolle bereitstellt, und
- beim fliegenden Rollenwechsel eine Lage der alten Rolle zumindest mit dieser frei liegenden Klebstoffschicht unmittelbar verklebt und das spaltbare Trägermaterial gespalten wird.

Gemäß einem Ausführungsbeispiel ist vorgesehen, dass vor dem fliegenden Rollenwechsel auch ein Teilbereich der mit Klebstoff beschichteten Oberseite des Trägermaterials frei liegt und dieser Teilbereich ebenfalls beim fliegenden Rollenwechsel mit der Lage der alten Papierrolle verklebt. Dieser Teilbereich ist bevorzugt vor dem fliegenden Rollenwechsel durch einen Teilbereich einer abziehbaren Decklage abgedeckt.

Die Erfindung wird nachfolgend unter Bezugnahme auf die Figuren der Zeichnung anhand eines Ausführungsbeispieles näher erläutert. Es zeigen:
- Figur 1: eine schematische Schnittansicht eines erfindungsgemäßen Klebebandes;
- Figur 2: eine schematische Darstellung einer Papierrolle mit einer obersten Lage und einer nächstfolgenden Lage;
- Figur 3: die Anordnung des Klebebandes der Figur 1 an einer Papierrolle gemäß der Figur 2; und
- Figur 4: schematisch den Einsatz der Anordnung der Figur 3 bei einem fliegenden Rollenwechsel.

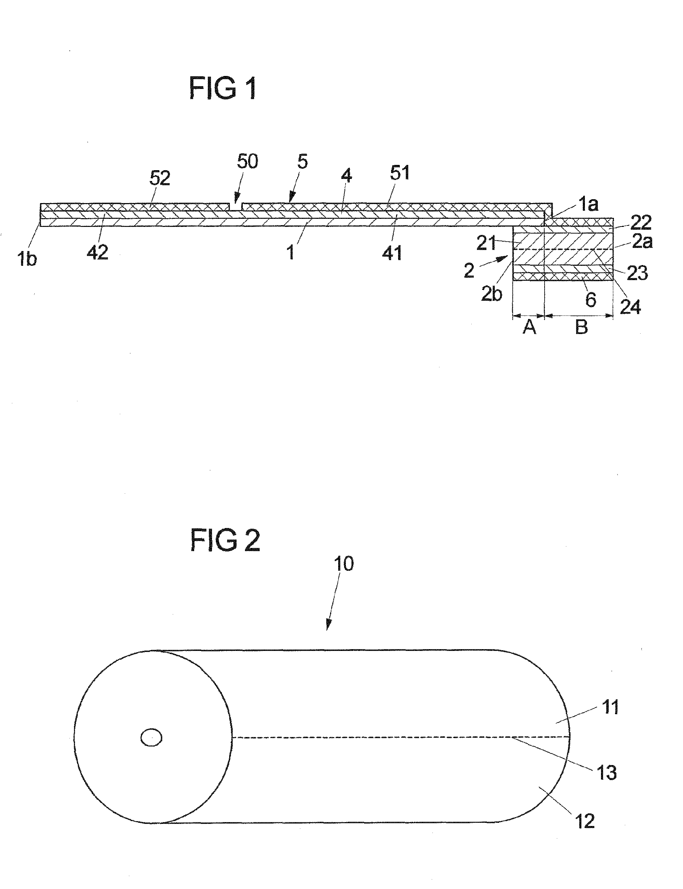

Die Figur 1 zeigt ein Ausführungsbeispiel eines erfindungsgemäßen Klebebandes. Das Klebeband umfasst ein Trägermaterial 1, bei dem es sich beispielsweise um einen Papierträger, einen aluminisierten Papierträger, einen Kunststoffträger oder einen reflektionsfähigen Träger handelt. Das Trägermaterial 1 umfasst eine Oberseite, eine Unterseite und zwei Längskanten 1a, 1b. Die Oberseite des Trägermaterials 1 ist einseitig mit einem Klebstoff 4 beschichtet, so dass eine Klebstoffschicht 4 vorliegt. Bei dem Klebstoff 4 handelt es sich beispielsweise um einen wasserlöslichen, drucksensitiven Haftklebstoff. Die Unterseite des Trägermaterials 1 ist nichtklebend ausgebildet.

Das Klebeband umfasst des Weiteren ein doppelseitig klebendes Band 2. Dieses besteht aus einem spaltbaren Trägermaterial 21, das auf einer Oberseite und auf einer Unterseite jeweils mit einem Klebstoff 22, 23 beschichtet ist, so dass eine obere Klebstoffsschicht 22 und eine untere Klebstoffschicht 23 realisiert sind. Das doppelseitig klebende Band 2 bzw. das spaltbare Trägermaterial 21 weisen ebenfalls zwei Längskanten 2a, 2b auf, die im dargestellten Ausführungsbeispiel geradlinig ausgebildet sind, jedoch auch eine andere, z.B. wellenförmige Form aufweisen können.

Bei dem spaltbaren Trägermaterial 21 handelt es sich beispielsweise um ein Spaltpapier. Das spaltbare Trägermaterial 21 weist dabei einen deutlich kleineren Spaltwiderstand als das Trägermaterial 1 auf, d.h. es ist weniger geeignet als das Trägermaterial 1, Zugkräfte aufzunehmen. Insbesondere ist das spaltbare Trägermaterial 21 derart ausgebildet, dass es bei Auftreten von Zugkräften auf die Klebstoffschichten 22 und 23 flächig aufgetrennt wird, wobei es zwei Schichten bildet, von der die eine mit der Klebstoffschicht 22 verbunden bleibt und die andere mit der Klebstoffschicht 23. Dies ist durch die gestrichelte Linie 24 des spaltbaren Trägermaterials 21 angedeutet.

Bei dem spaltbaren Trägermaterial 21 handelt es sich beispielsweise um ein Duplex-Papier, ein leicht spaltendes Papier oder ein geleimtes Papiersystem. Solche Spaltpapiere sind dem Fachmann bekannt und beispielsweise in der EP 1 022 245 B1 beschrieben.

Das doppelseitig klebende Band 2 ist nun derart an der Unterseite des Trägermaterials 1 angeordnet, dass ein Teilbereich A des doppelseitig klebenden Bandes 2 über die Klebstoffschicht 22 an der Unterseite des Trägermaterials 1 angeklebt ist und sich bis zur Längskante 1b erstreckt. Ein weiterer Teilbereich B steht dagegen von der Längskante 1a des Trägermaterials 1 über. Mit anderen Worten verläuft die eine Längskante 2a des doppelseitig klebenden Bandes 2 nach außen versetzt zu der Längskante 1a des Trägermaterials 1 und die andere Längskante 2b des doppelseitig klebenden Bandes 2 entlang der Unterseite des Trägermaterials 1.

Dabei ist vorgesehen, dass der Teilbereich B, der gegenüber dem Trägermaterial 1 und der Längskante 1a übersteht, breiter ist als der Teilbereich A, der sich unterhalb des Trägermaterials 1 befindet. Beispielsweise beträgt die Breite des Bereichs A zwischen 1,5 mm und 20 mm und die Breite des Bereichs B zwischen 2 und 35 mm.

Das Klebeband der Figur 1 umfasst des Weiteren zwei abziehbare Decklagen 5, 6. Die eine abziehbare Decklage 5 ist auf der Oberseite der Klebstoffschicht 4 angeordnet. Dabei weist sie einen Schlitz 50 auf, der die Decklage 5 in zwei Teilbereiche 51, 52 unterteilt. Des Weiteren ist auch die untere Klebstoffschicht 23 des doppelseitig klebenden Bandes 2 mit einer abziehbaren Decklage 6 verbunden.

Bei der abziehbaren Decklage 5, 6 handelt es sich beispielsweise um ein silikonisiertes Papier. Es können jedoch auch andere Deckmaterialien eingesetzt werden, die eine Entfernung von einer darunterliegenden Klebstoffschicht erlauben, ohne Klebematerial der Klebstoffschicht mitzunehmen.

Es wird darauf hingewiesen, dass der Teilbereich 51 der Decklage 5 sich über die Längskante 1 a des Trennmaterials 1 hinaus so weit erstreckt, dass er auch die mit einem Klebstoff 22 beschichtete Oberseite des spaltbaren Trägermaterials 21 bzw. die Klebstoffschicht 22 abdeckt. Die Längskante der Decklage 51 liegt somit auf der Längskante 2a des doppelseitig klebenden Bandes 2.

Der in der Figur 1 dargestellte Knick der Decklage 5 beim Übergang zum doppelseitig klebenden Bandes 2 ist nur der schematischen Darstellung geschuldet und in einer tatsächlichen Ausführungsform nicht oder nicht in dieser Stärke realisiert, da die Dicke der Schicht 1 bei unter 0,5 mm, beispielsweise bei 0,1 mm liegt, und die Dicke der Klebstoffschicht 4 noch geringer ist.

Der erwähnte Schlitz 50 der Decklage 5 verläuft beispielsweise in einem Abstand zwischen 10 mm und 30 mm von der Längskante 1b.

Die Figur 2 zeigt eine neue Papierrolle 10 mit einer obersten Lage 11 und einer nächstfolgenden Lage 12. Die Längskante der obersten Lage 11, unter der sich die nächstfolgende Lage 12 befindet, ist mit dem Bezugszeichen 13 bezeichnet.

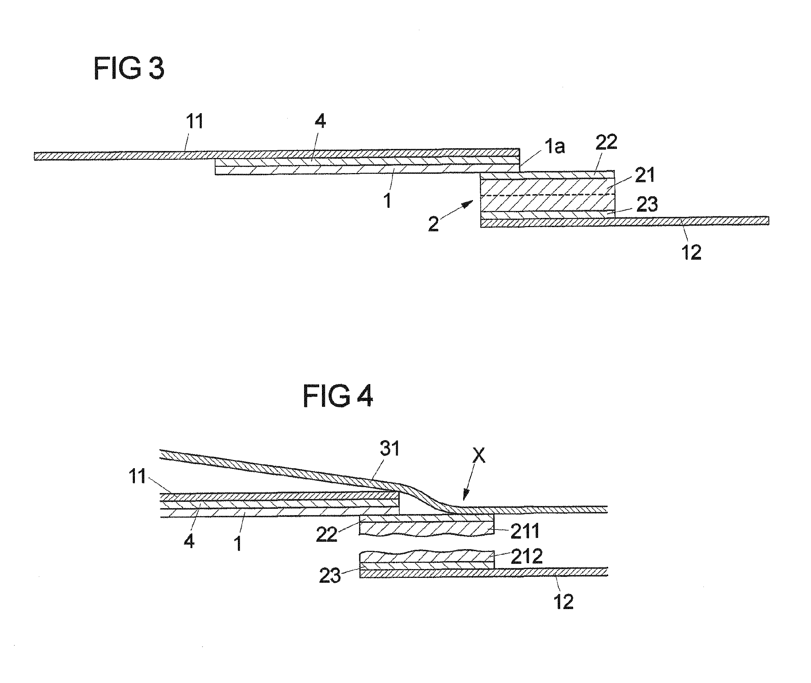

Die Figur 3 zeigt die Befestigung des Klebebandes der Figur 1 an einer Papierrolle gemäß der Figur 2 zur Vorbereitung eines fliegenden Rollenwechsels. Dabei sind die Decklagen 51, 52, 6 des Klebebandes der Figur 1 entfernt worden, so dass die entsprechenden Klebstoffschichten 4, 22, 23 frei zugänglich sind.

Gemäß der Figur 3 ist die Klebstoffschicht 4 auf der Unterseite der obersten Papierlage 11 angeklebt. Gleichzeitig ist die Klebstoffschicht 23 des doppelseitig klebenden Bandes 2 auf der Oberseite der nächstfolgenden Lage 21 befestigt, so dass die Lage 11 über das Klebeband auf der Lage 12 festgeklebt ist. Dabei ist zu beachten, dass die Klebstoffschicht 22 an der Oberseite des spaltbaren Trägermaterials 21 freiliegt.

Die Figur 4 zeigt nun den Einsatz der Anordnung der Figur 3 bei einem fliegenden Rollenwechsel. Dabei wird die Situation betrachtet, dass die oberste Lage 11 der neuen Papierrolle 10 mit einer Papierlage 31 einer alten (nicht dargestellten) Papierrolle zu verbinden ist. Nachdem die beiden Rollen auf eine gleiche Bahngeschwindigkeit beschleunigt sind, wird die neue Rolle 10 oder die alte Rolle derart angedrückt, dass die Papierlage 31 der alten Rolle an der Klebstoffschicht 22 des doppelseitig klebenden Bandes 2 zur Anlage kommt, wobei sich in einem Bereich X eine klebende Verbindung zwischen dem doppelseitig klebenden Band 2 und der Lage 31 der alten Papierrolle andererseits ergibt. Hierdurch wird die Lage 31 mit der obersten Lage 11 der neuen Rolle verbunden.

Die klebende Verbindung im Bereich X führt zu Zugkräften auf das spaltbare Trägermaterial 21, so dass dieses flächig aufgetrennt wird, unter Zurückbleiben zweier Restbereiche 211, 212, wobei der eine Restbereich 211 mit der Klebstoffschicht 22 und der andere Restbereich 212 mit der Klebstoffschicht 23 verbunden ist. Das Auftrennen des spaltbaren Trägermaterials 2 führt zu einem Lösen der Lage 12. Die Lage 31 der alten Papierrolle ist allein mit der Lage 11 verbunden; der fliegende Rollenwechsel ist erfolgt.

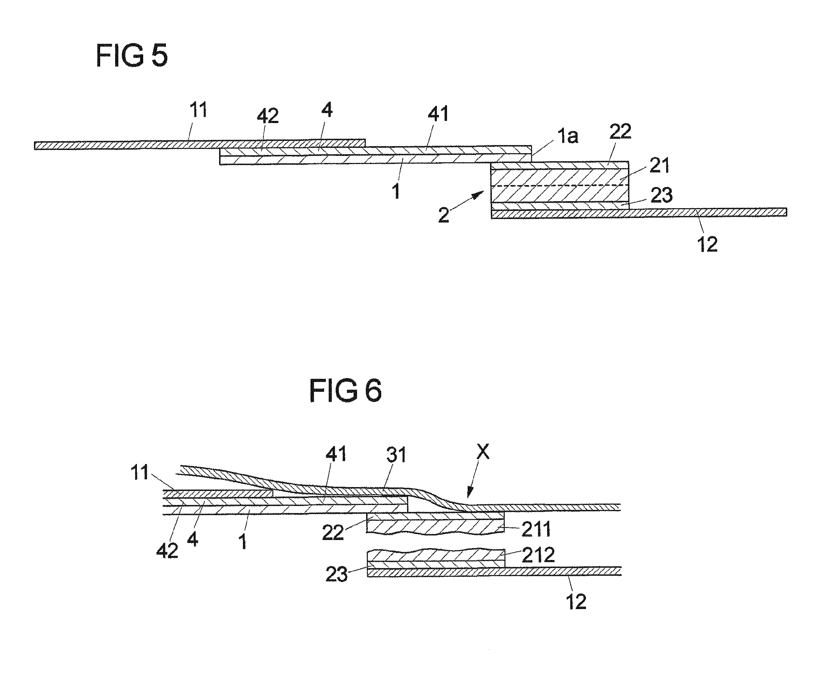

Die Figuren 5 und 6 zeigen eine Abwandlung der Anordnung und des Verfahrens der Figuren 3 und 4. Gemäß dieser Abwandlung erstreckt sich die oberste Lage 11 der Papierrolle 10 nicht bis zur Längskante 1a des Trägermaterials 1, sondern endet davor. Andere Unterschiede bestehen nicht.

Somit ist vorgesehen, dass das Trägermaterial 1 nur in einem Bereich 42 der Klebstoffschicht, der sich unterhalb der Decklage 52 der Figur 1 befindet, an der Unterseite der obersten Lage 11 befestigt wird, und im Bereich des Schlitzes 50 der Figur 1 endet. Das bedeutet, dass zusätzlich zu der Oberfläche 22 des doppelseitig klebenden Bandes 2 auch der Bereich 41 der Klebstoffschicht 4, der sich unterhalb der Decklage 51 der Figur 1 befindet, für eine klebende Verbindung mit der Papierlage 31 bereitsteht, wie in der Figur 6 dargestellt ist. Die insgesamt für eine klebende Verbindung bereitgestellte Fläche wird dadurch vergrößert. Bei dieser Ausführungsvariante kann die Decklage 51 der Figur 1 erst kurz vor Vornahme des fliegenden Rollenwechsels entfernt werden.

In beiden Ausführungsvarianten wird das zu spleißende Material 21 mit der Papierlage 31 der alten Rolle direkt verbunden und anschließend getrennt, d.h. die Papierlage 31 der alten Rolle kommt über die Klebstoffschicht 22 bzw. deren Klebefläche mit dem zu spleißenden Material 21 direkt in Kontakt und führt ein Auftrennen des spaltbaren Trägermaterials 21 herbei. Hierdurch wird in besonders sicherer und effektiver Weise ein Spalten des spaltbaren Trägermaterials 21 sichergestellt.

Die Erfindung beschränkt sich in ihrer Ausführbarkeit nicht auf die vorstehend dargestellten Ausführungsbeispiele, die lediglich beispielhaft zu verstehen sind. Beispielsweise sind die dargestellten Dimensionen und Größenverhältnisse lediglich beispielhaft zu verstehen.

## Patentansprüche

1. Klebeband für einen fliegenden Rollenwechsel, das aufweist:
- ein Trägermaterial (1) mit einer Oberseite, einer Unterseite und zwei Längskanten (1a, 1b), wobei die Oberseite des Trägermaterials (1) mit einem Klebstoff (4) beschichtet und die Unterseite des Trägermaterials (1) nichtklebend ausgebildet ist,
- ein doppelseitig klebendes Band (2) mit einer Oberseite, einer Unterseite und zwei Längskanten (2a, 2b), das ein spaltbares Trägermaterial (21) aufweist, das beidseitig mit einem Klebstoff (22, 23) beschichtet ist,
- wobei das doppelseitig klebende Band (2) an der Unterseite des Trägermaterials (1) angeordnet ist,
**dadurch gekennzeichnet,**
**dass** das doppelseitig klebende Band (2) derart an der Unterseite des Trägermaterials (1) angeordnet ist, dass ein Teilbereich (B) des doppelseitig klebenden Bandes (2) von der einen Längskante (1a) des Trägermaterials (1) übersteht.

2. Klebeband nach Anspruch 1, **dadurch gekennzeichnet, dass** das Trägermaterial (1) durch einen Papierträger gebildet ist.

3. Klebeband nach Anspruch 1, **dadurch gekennzeichnet, dass** das Trägermaterial (1) durch einen Kunststoffträger gebildet ist.

4. Klebeband nach einem der vorangehenden Ansprüche, **dadurch gekennzeichnet, dass** das spaltbare Trägermaterial (21) durch ein Spaltpapier gebildet ist.

5. Klebeband nach einem der vorangehenden Ansprüche, **dadurch gekennzeichnet, dass** der Klebstoff (4, 22, 33) jeweils ein Haftklebstoff, insbesondere ein wasserlöslicher drucksensitiver Haftklebstoff ist.

6. Klebeband nach einem der vorangehenden Ansprüche, **dadurch gekennzeichnet, dass** der überstehende Teilbereich (B) des doppelseitig klebenden Bandes (2) einen parallel zur Längskante (1a) des Trägermaterials (1) verlaufenden Bereich ausbildet.

7. Klebeband nach Anspruch 6, **dadurch gekennzeichnet, dass** der überstehende Teilbereich (B) des doppelseitig klebenden Bandes (2) eine Breite zwischen 2 mm und 35 mm besitzt.

8. Klebeband nach einem der vorangehenden Ansprüche, **dadurch gekennzeichnet, dass** der nicht überstehende, sich an der Unterseite des Trägermaterials (1) befindliche Teilbereich (A) des doppelseitig klebenden Bandes (2) eine Breite zwischen 1,5 mm und 20 mm besitzt.

9. Klebeband nach einem der vorangehenden Ansprüche, **dadurch gekennzeichnet, dass** der Klebstoff (4) an der Oberseite des Trägermaterials (1) mit einer abziehbaren Decklage (5) abgedeckt ist.

10. Klebeband nach Anspruch 9, **dadurch gekennzeichnet, dass** die Decklage (5) sich über die eine Längskante (1a) des Trägermaterials (1) hinaus so weit erstreckt, dass sie auch die mit einem Klebstoff beschichtete Oberseite (22) des überstehenden Bereichs (B) des spaltbaren Trägermaterials (21) abdeckt.

11. Klebeband nach Anspruch 9 oder 10, **dadurch gekennzeichnet, dass** die Decklage (5) ein silikonisiertes Papier umfasst.

12. Klebeband nach einem der Ansprüche 9 bis 11, **dadurch gekennzeichnet, dass** die Decklage (5) mit einem Schlitz (50) versehen ist.

13. Klebeband nach Anspruch 12, **dadurch gekennzeichnet, dass** der Schlitz (50) in einem Abstand zwischen 10 mm und 30 mm von der Längskante (1b) des Trägermaterials (1) angeordnet ist, die der Längskante (1a) gegenüberliegt, an der das doppelseitig klebende Band (2) übersteht.

14. Klebeband nach einem der vorangehenden Ansprüche, **dadurch gekennzeichnet, dass** der Klebstoff (23) an der Unterseite des spaltbaren Trägermaterials (21) mit einer abziehbaren Decklage (6) abgedeckt ist.

15. Verwendung eines Klebeband gemäß Anspruch 1 für einen fliegenden Rollenwechsel, wobei
- die mit einem Klebstoff (4) beschichtete Oberseite des Trägermaterials (1) zumindest teilweise an der Unterseite der obersten Lage (11) einer neuen Rolle (10) verklebt wird,
- die mit einem Klebstoff (23) beschichtete Unterseite des doppelseitig klebendes Bandes (2) an der Oberseite der darunter liegenden nächstfolgenden Lage (12) der neuen Rolle (10) verklebt wird,
- wobei der Klebstoff (22) auf der Oberseite des gegenüber der Längskante (1a) des Trägermaterials (1) überstehenden Teilbereichs (B) des doppelseitig klebenden Bandes (2) frei liegt und dort eine Klebstoffschicht zur Verbindung mit einer Lage (31) einer alten Rolle bereitstellt, und
- beim fliegenden Rollenwechsel eine Lage (31) der alten Rolle zumindest mit dieser frei liegenden Klebstoffschicht unmittelbar verklebt und das spaltbare Trägermaterial (21) gespalten wird.

16. Verwendung nach Anspruch 15, **dadurch gekennzeichnet, dass** vor dem fliegenden Rollenwechsel auch ein Teilbereich (41) der mit Klebstoff (4) beschichteten Oberseite des Trägermaterials (1) frei liegt und dieser Teilbereich (41) ebenfalls beim fliegenden Rollenwechsel mit der Lage (31) der alten Rolle verklebt.
